# EUROPEAN PATENT SPECIFICATION

(11) **EP 3 381 660 B1**
(45) Date of publication and mention of the grant of the patent: **29.09.2021**
(21) Application number: 16868341.5
(22) Date of filing: 02.11.2016
(51) Int. Cl.: B29C 65/44, B23K 26/324, B23K 26/382, B23K 26/57, B29C 65/00, B29C 65/16

(54) **METHOD FOR MANUFACTURING BONDED STRUCTURE AND BONDED STRUCTURE**
VERFAHREN ZUR HERSTELLUNG EINER GEBUNDENEN STRUKTUR UND GEBUNDENE STRUKTUR
PROCÉDÉ DE FABRICATION D'UNE STRUCTURE LIÉE ET STRUCTURE LIÉE

(30) Priority: 27.11.2015 JP 2015231437
(43) Date of publication of application: 03.10.2018
(73) Proprietor: Omron Corporation, Kyoto-shi, Kyoto 600-8530 (JP)
(72) Inventor: KAMIOKA Wataru, Kyoto-shi Kyoto 600-8530 (JP); NISHIKAWA Kazuyoshi, Kyoto-shi Kyoto 600-8530 (JP)
(74) Representative: Becker & Kurig Partnerschaft Patentanwälte PartmbB
(86) International application number: PCT/JP2016/082520
(87) International publication number: WO 2017/090392

(56) References cited:
- EP-A1- 2 610 046
- WO-A1-2012/020531
- JP-A- 2015 030 260
- JP-A- 2015 030 260

## Description

### BACKGROUND

### Technical Field

The present invention relates to a method for manufacturing a bonded structure and a bonded structure.

### Description of Related Art

In the related art, a bonding method of bonding a first member formed of a resin material and a second member formed of a metal material is known (for example, see Patent Literature 1).

In the bonding method of Patent Literature 1, a concavo-convex surface is formed on a surface of the second member, and a laser beam is radiated to the concavo-convex surface from the first member side in a state in which the first member is in contact with the concavo-convex surface. Accordingly, since the first member is melted in the vicinity of a boundary surface between the first member and the second member and the melted first member bites into the concavo-convex surface, the first member and the second member are bonded by an anchor effect.

### [Citation List]

### [Patent Literature]

[Patent Literature 1]: Japanese Unexamined Patent Application Publication No. 2006-15405

WO 2012/020531 A1 discloses a laser bonding method for laser bonding a thermoplastic resin and a metal, in which the peeling associated with thermal stress during bonding is controlled by improving interface adhesion between the thermoplastic resin and the metal. The laser bonding method comprises a step in which, prior to bonding, an oxidation layer having a high oxygen functional group content compared to a bulk thermoplastic resin is formed on at least the bonding interface side of the thermoplastic resin by means of surface modification treatment. The thermoplastic resin and metal are bonded by the application of pressure and laser irradiation in a state in which the surface energy of the metal at the bonding surface is higher than the surface energy of the thermoplastic resin on which the oxidation layer has been formed.

JP 2015 030260 A discloses a composite molded article having a metal member with a surface comprising a metal as a base material; and a polymer material part which is covered with at least a part of the surface of the metal member and comprises the polymer material. The surface of the metal member is irradiated with femtosecond laser or picosecond laser to form long minute grooves thereon. A plurality of the minute grooves is formed side by side at a cycle depending on the optical wavelength of the laser. The inside of the minute grooves is packed with a part of the polymer material.

### SUMMARY

### [Technical Problem]

Here, like the above-mentioned bonding method, when the first member and the second member are bonded by the anchor effect, in general, a force is applied from the outside to closely attach boundary surfaces (bonded surfaces) of the first member and the second member. Then, when the force applied from the outside is increased, while the melted first member bites into the concavo-convex surface, a thermal deformation strain may occur in the first member formed of the resin material and cause a stress crack.

In order to solve the above-mentioned problems, an object of the present invention is to provide a method for manufacturing a bonded structure and a bonded structure that are capable of improving a filling rate of a resin member into perforations while suppressing occurrence of a thermal deformation strain in the resin member.

### [Solution to Problem]

The present invention is provided in appended claims 1 and 8. The dependent claims are directed to some beneficial embodiments. The following disclosure serves a better understanding of the invention.

### [Advantageous Effects of Invention]

According to a method for manufacturing a bonded structure and a bonded structure of the present invention, it is possible to achieve improvement of a filling rate of a resin member into perforations while suppressing occurrence of a thermal deformation strain in the resin member.

### BRIEF DESCRIPTION OF THE DRAWINGS

FIG. 1 is a schematic cross-sectional view showing an enlarged bonded section of a bonded structure according to a first reference example of the present disclosure.
FIG. 2 is a perspective view showing a metal member of the bonded structure in FIG. 1.
FIG. 3 is a perspective view showing a resin member of the bonded structure in FIG. 1.
FIG. 4 is a view for describing a process of forming perforations in the metal member in a method for manufacturing a bonded structure of the first reference example.
FIG. 5 is a view for describing a process of bonding a metal member and a resin member in the method for manufacturing the bonded structure of the first reference example.
FIG. 6 is a schematic cross-sectional view showing an enlarged bonded section of a bonded structure according to a second reference example of the present disclosure.
FIG. 7 is a perspective view showing a resin member of the bonded structure in FIG. 6.
FIG. 8 is a schematic cross-sectional view showing an enlarged bonded section of a bonded structure according to a third reference example of the present disclosure.
FIG. 9 is a perspective view showing a resin member of the bonded structure in FIG. 8.
FIG. 10 is a schematic cross-sectional view showing an enlarged bonded section of a bonded structure according to a fourth reference example of the present disclosure.
FIG. 11 is a perspective view showing a metal member of the bonded structure in FIG. 10.
FIG. 12 is a schematic cross-sectional view showing an enlarged bonded section of a bonded structure according to an embodiment of the present invention.
FIG. 13 is a perspective view showing a metal member of the bonded structure in FIG. 12.
FIG. 14 is a schematic cross-sectional view showing an enlarged bonded section of a bonded structure according to a fifth reference example of the present disclosure.
FIG. 15 is a view for describing a process of bonding a metal member and a resin member in a method for manufacturing a bonded structure of a fifth reference example.
FIG. 16 is a schematic cross-sectional view showing an enlarged bonded section of a bonded structure according to a sixth reference example of the present disclosure.
FIG. 17 is a perspective view showing a metal member of the bonded structure in FIG. 16.
FIG. 18 is a perspective view showing a metal member of a bonded structure in Experimental Reference Example 1.
FIG. 19 is a perspective view showing a resin member of the bonded structure in Experimental Reference Example 1.
FIG. 20 is a perspective view showing a resin member of a bonded structure in Experimental Reference Example 3.
FIG. 21 is a perspective view showing a metal member of a bonded structure in Experimental Reference Example 7.
FIG. 22 is a schematic cross-sectional view showing a metal member according to a first variant of the first reference example.
FIG. 23 is a schematic cross-sectional view showing a metal member according to a second variant of the first reference example.
FIG. 24 is a schematic cross-sectional view showing a metal member according to a third variant of the first reference example.

### DESCRIPTION OF THE EMBODIMENTS

Hereinafter, an embodiment of the present invention will be described with reference to the accompanying drawings.

### (First reference example)

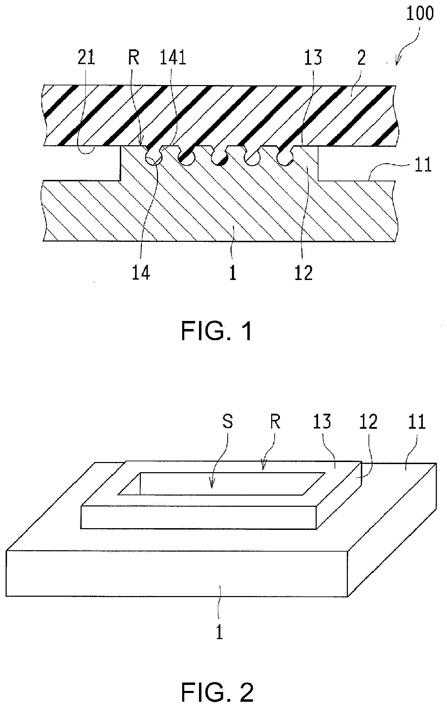

First, a bonded structure 100 according to a first reference example of the present disclosure will be described with reference to FIGs. 1 to 3.

As shown in FIG. 1, the bonded structure 100 includes a metal member 1 and a resin member 2, and the metal member 1 and the resin member 2 are bonded to each other.

As shown in FIG. 2, the metal member 1 has a flat surface 11, and a protrusion 12 protruding from the surface 11. The protrusion 12 has a rectangular cross section, and a bonding region R to which the resin member 2 is bonded is formed on an end surface (an upper end surface) 13 thereof. The protrusion 12 is formed in a rectangular annular shape when seen from a plan view, and installed to surround an internal space S thereof. That is, in the metal member 1, the bonding region R is formed in a rectangular annular shape when seen from a plan view. Further, for example, the bonding region R is formed in the entire region of the end surface 13.

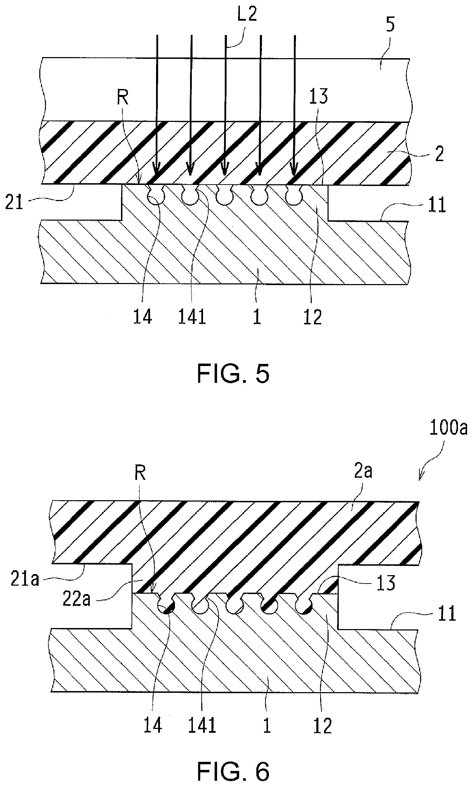

Further, a width of the protrusion 12 is preferably 0.1 to 4.0 mm. When a width of the protrusion 12 is less than 0.1 mm, a bonded surface area may not be sufficient to obtain a bonding strength, and when a width of the protrusion 12 exceeds 4 mm, it exceeds an irradiation diameter of a laser beam L2 for bonding and a non-bonded area is likely to be generated in the end surface 13 (see FIG. 5). In addition, a height of the protrusion 12 is preferably 0.05 mm or more. When the height of the protrusion 12 is less than 0.05 mm, the height may be buried in a variation of profile irregularity.

As shown in FIG. 1, a plurality of perforations 14 are formed in the bonding region R of the metal member 1, and the resin member 2 is filled in the perforations 14 and solidified. Accordingly, the metal member 1 and the resin member 2 are functionally bonded by an anchor effect.

The perforations 14 are non-through holes having circular shapes when seen from a plan view, and projections 141 protruding inwards are formed on inner circumferential surfaces thereof. The projections 141 are formed throughout the length in the circumferential direction in an annular shape.

Specifically, the perforations 14 are formed such that a first diameter-reduced section having an opening diameter that is reduced from the end surface 13 side toward a bottom section in a depth direction, a diameter-increased section having an opening diameter that is increased from the end surface 13 side toward the bottom section in the depth direction and a second diameter-reduced section having an opening diameter that is reduced from the end surface 13 side toward the bottom section in the depth direction are connected to each other. The first diameter-reduced section is disposed at the end surface 13 side, and formed to have a diameter that is reduced in a straight shape. The diameter-increased section is disposed between the first diameter-reduced section and the second diameter-reduced section, and formed to have a diameter that is increased in a curve shape. The second diameter-reduced section is disposed at the bottom section side and formed to have a diameter that is reduced in a curve shape. That is, each of the projections 141 is constituted by the first diameter-reduced section and the diameter-increased section.

An opening diameter of an opening end of the perforations 14 is preferably 30 µm or more and 100 µm or less. This is because a filling ability of the resin member 2 may deteriorate and the anchor effect may be decreased when the opening diameter is less than 30 µm. Meanwhile, when the opening diameter exceeds 100 µm, the number of perforations 14 per unit area may be reduced and the anchor effect may be decreased.

In addition, an interval of the perforations 14 (a distance between a center of the predetermined perforation 14 and a center of the perforation 14 adjacent to the predetermined perforation 14) may be 200 µm or less. This is because the number of perforations 14 per unit area may be reduced and the anchor effect may be decreased when the interval of the perforations 14 exceeds 200 µm.

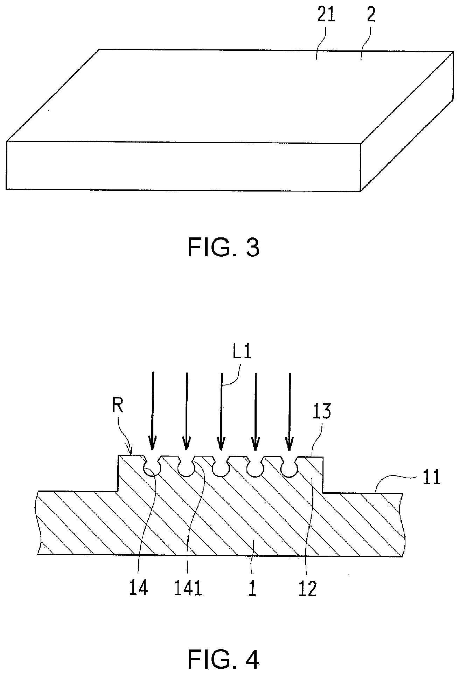

The perforations 14 are formed by, for example, a laser beam L1 for machining (see FIG. 4). Further, a laser apparatus configured to emit a laser beam L1 may be an apparatus that enables pulse oscillation, a fiber laser, a YAG laser, a YVO4 laser, a semiconductor laser, a carbon dioxide gas laser, and an excimer laser may be selected, and in consideration of a wavelength, the fiber laser, the YAG laser, a second higher harmonic wave of the YAG laser, the YVO4 laser and the semiconductor laser are preferable.

The above-mentioned perforations 14 are formed by the laser beam L1 in which one pulse is constituted by a plurality of sub-pulses. In the laser beam L1, since energy is likely to be concentrated in a depth direction, it is appropriate for forming of the perforations 14. As an example of the laser apparatus that can radiate such a laser beam L1, a fiber laser marker MX-Z2000 or MX-Z2050 manufactured by Omron Corp. may be exemplified.

As a processing condition according to the fiber laser marker, one period of a sub-pulse is preferably 15 ns or less. This is because energy is likely to be diffused by thermal conduction and the perforations 14 are not easily formed when one period of the sub-pulse exceeds 15 ns. Further, one period of the sub-pulse is a total time of an irradiation time of one time of the sub-pulse and the interval from termination of the irradiation of the sub-pulse to starting of irradiation of the next sub-pulse.

In addition, the number of sub-pulses of one pulse is preferably 2 or more and 50 or less. This is because the output per unit of the sub-pulse is reduced and the perforations 14 are not easily formed when the number of sub-pulses exceeds 50.

As an example of a material of the metal member 1, an iron-based metal, a stainless-based metal, a copper-based metal, an aluminum-based metal, a magnesium-based metal, and an alloy thereof are exemplified. In addition, the material may be a metal-molded body, or may be formed through zinc die-casting, aluminum die-casting, powder metallurgy, or the like.

As shown in FIG. 3, the resin member 2 has a flat surface 21. For example, the resin member 2 is formed of a material having permeability with respect to a laser beam L2 for bonding (see FIG. 5). Further, as a laser apparatus configured to emit the laser beam L2, a fiber laser, a YAG laser, a YVO4 laser, a semiconductor laser, a carbon dioxide gas laser, and an excimer laser may be exemplified.

As an example of a material of the resin member 2, polymethyl methacrylate (PMMA), polycarbonate (PC), polystyrene (PS), polyarylate (PAR), polyether sulfone (PES), polyether imide (PEI), a cycloolefin copolymer (COC), a cycloolefin polymer (COP), fluorene derivatives, an ethylene tetrafluoroethylene copolymer (EFEP), polysulfone (PSU), polyphenyl sulfone (PPSU), acrylonitrile-styrene (AS), low density polyethylene (LDPE), polypropylene (PP), polyethylene (PE), polybutylene terephthalate (PBT), polyethylene terephthalate (PET), polyamide (PA), polyamide 6 (PA6), polyamide 66 (PA66), polyacetal (POM), polyphenylene sulfide (PPS), polyvinyl chloride (PVC), polyvinylidene chloride (PVDC), and polyvinylidene fluoride (PVDF) are exemplified. In addition, the resin member 2 may be a thermoplastic elastomer (TPE), and as an example of the TPE, a thermoplastic olefin (TPO), thermoplastic styrene (TPS), a thermoplastic ester elastomer (TPEE), thermoplastic urethane (TPU), a thermoplastic polyamide elastomer (TPA, a Nylon-based material), and thermoplastic polyvinyl chloride (TPVC, a vinyl chloride-based material) are exemplified.

Further, a filler may be added to the resin member 2. As an example of the filler, an inorganic filler (glass fiber, minerals, or the like), a metal-based filler, an organic filler, a carbon fiber, and so on are exemplified.

Then, in the bonded structure 100, as shown in FIG. 1, the resin member 2 butts against the end surface 13 of the protrusion 12 of the metal member 1, and the metal member 1 and the resin member 2 are bonded in the bonding region R of the end surface 13. For this reason, in the bonded structure 100, the surface 11 of the metal member 1 and the surface 21 of the resin member 2 are separated. That is, a portion of the metal member 1 in which the protrusion 12 is not formed is separated from the resin member 2. That is, only the end surface 13 of the protrusion 12 in which the bonding region R is formed comes in contact with the resin member 2.

### - Method for manufacturing bonded structure-

Next, a method for manufacturing a bonded structure 100 according to the first reference example will be described with reference to FIGs. 1 to 5.

First, the resin member 2 (see FIG. 3) having the flat surface 21 is formed while forming the metal member 1 (see FIG. 2) having the protrusion 12 on the flat surface 11. Then, as shown in FIG. 4, as the bonding region R of the protrusion 12 of the metal member 1 is irradiated with the laser beam L1 for machining, the perforations 14 having the projections 141 are formed on the inner circumferential surface. Further, the laser beam L1 is a beam in which one pulse is constituted by a plurality of sub-pulses. In addition, the laser beam L1 is an example of "a second laser beam" of the present invention.

Then, as shown in FIG. 5, the metal member 1 and the resin member 2 are stacked. Here, the resin member 2 is separated from the surface 11 of the metal member 1 while the end surface 13 of the protrusion 12 of the metal member 1 is in contact with the resin member 2. That is, the bonding region R of the metal member 1 comes in contact with the resin member 2, and other portions of the metal member 1 do not come in contact with the resin member 2.

In addition, a pressurizing member 5 is disposed to sandwich the resin member 2 between the metal member 1 and the pressurizing member 5. The pressurizing member 5 is disposed throughout the surface of the resin member 2 and formed of a material having high permeability with respect to the laser beam L2 for bonding (specifically, glass, a resin, or the like having a transmittance of 90% or more). Then, the resin member 2 is pressurized toward the metal member 1 by the pressurizing member 5. Further, a welding pressure at this time is, for example, several MPa or more to suppress generation of the thermal deformation strain in the resin member 2.

In this way, in a state in which the resin member 2 comes in pressurized contact with the bonding region R of the metal member 1, the laser beam L2 for bonding is radiated from the resin member 2 side (the pressurizing member 5 side) toward the bonding region R. Further, the laser beam L2 is radiated along the annular protrusion 12, and an irradiation diameter thereof is set to, for example, the same as the width of the protrusion 12. In addition, the laser beam L2 is scanned for a plurality of times (for example, three times). For this reason, the metal member 1 in the vicinity of a contact surface between the metal member 1 and the resin member 2 reaches a high temperature, and the resin member 2 in the vicinity of the contact surface is melted. Then, the perforations 14 are filled with the melted resin member 2, and then the melted resin member 2 is solidified. Accordingly, the metal member 1 and the resin member 2 are mechanically bonded by an anchor effect. Further, the laser beam L2 is an example of "a first laser beam" of the present invention.

In this way, the bonded structure 100 as shown in FIG. 1 is manufactured.

### - Effect -

In the first reference example, as described above, the perforations 14 are formed on the bonding region R using the protrusion 12 of the metal member 1 as the bonding region R and the resin member 2 comes in pressurized contact with the bonding region R in a state in which the resin member 2 is separated from the surface 11 of the metal member 1, and the resin member 2 is melted and filled in the perforations 14 to be solidified. According to the above-mentioned configuration, in comparison with the case in which the metal member and the resin member are flat and come in contact with each other entirely, a force applied from the pressurizing member 5 to the resin member 2 can be suppressed from being diffused in the contact surface. That is, a force applied from the pressurizing member 5 to the resin member 2 can be concentrated on the bonding region R (the contact surface between the metal member 1 and the resin member 2). Accordingly, a welding pressure can be efficiently applied to the bonding region R (the contact surface) while an increase of the force applied from the pressurizing member 5 to the resin member 2 is suppressed. Accordingly, improvement of a filling rate of the resin member 2 into the perforations 14 can be achieved while occurrence of the thermal deformation strain in the resin member 2 is suppressed. As a result, improvement of durability under a heat cycle environment can be achieved while improvement of a bonding strength of the bonded structure 100 is achieved.

In addition, in the first reference example, the internal space S (see FIG. 2) can be sealed by forming the protrusion 12 in an annular shape when seen from a plan view.

In addition, in the first reference example, an anchor effect can be further improved by forming the projections 141 on the inner circumferential surfaces of the perforations 14.

In addition, in the first reference example, as the laser beam L2 is scanned for a plurality of times, a filling rate of the resin member 2 with respect to the perforations 14 can be further improved.

In addition, in the first reference example, thermal diffusion upon laser radiation for bonding can be suppressed by forming the bonding region R on the protrusion 12. Accordingly, a variation of bonding due to thermal diffusion can be suppressed by efficiently using laser energy for bonding.

### (Second reference example)

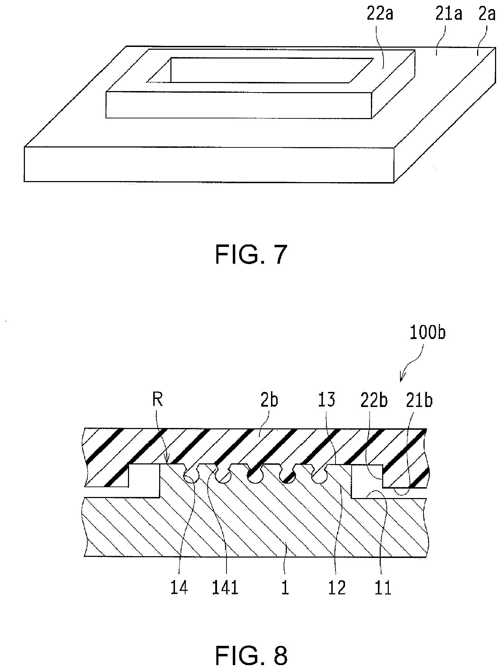

Next, a bonded structure 100a according to a second reference example of the present disclosure will be described with reference to FIGs. 6 and 7.

As shown in FIG. 6, the bonded structure 100a includes a metal member 1 and a resin member 2a, and the metal member 1 and the resin member 2a are bonded.

As shown in FIG. 7, the resin member 2a has a flat surface 21a, and a protrusion 22a protruding from the surface 21a. The protrusion 22a has a rectangular cross section, and is formed in an annular shape to correspond to the protrusion 12 of the metal member 1 when seen from a plan view.

Further, the other configuration of the resin member 2a is the same as that of the resin member 2.

Then, in the bonded structure 100a, as shown in FIG. 6, the protrusion 12 of the metal member 1 and the protrusion 22a of the resin member 2a butt against each other, and the metal member 1 and the resin member 2a are bonded in the bonding region R in which they butt against each other. For this reason, in the bonded structure 100a, the surface 11 of the metal member 1 and the surface 21a of the resin member 2a are separated from each other.

Further, the method for manufacturing the bonded structure 100a is the same as that of the first reference example except that the protrusion 22a of the resin member 2a comes in pressurized contact with the bonding region R of the protrusion 12 of the metal member 1.

In the second reference example, as described above, even when the resin member 2a is likely to be thermally deformed upon boding as a thickness of the resin member 2a is reduced, the thickness can be secured by the protrusion 22a to suppress thermal deformation by forming the protrusion 22a on the resin member 2a. That is, in the second reference example, even when the thickness of the resin member 2a is reduced (for example, when the thickness is less than 1.0 mm), the bonded structure 100a can be obtained.

Further, the other effect of the second reference example is the same as that of the first reference example.

### (Third reference example)

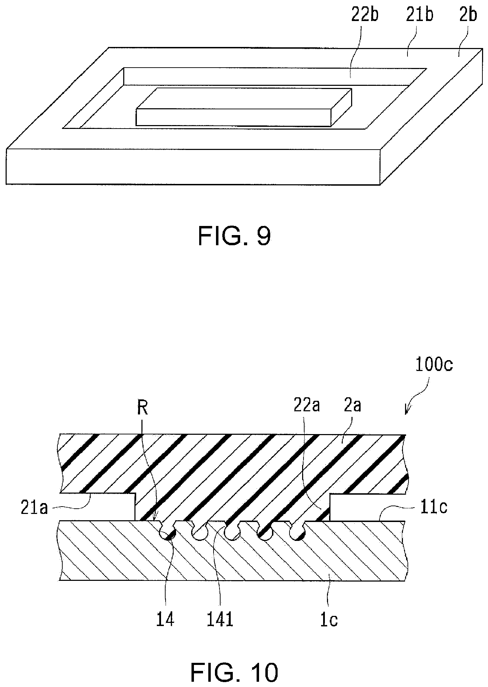

Next, a bonded structure 100b according to a third reference example of the present disclosure will be described with reference to FIGs. 8 and 9.

As shown in FIG. 8, the bonded structure 100b includes a metal member 1 and a resin member 2b, and the metal member 1 and the resin member 2b are bonded.

As shown in FIG. 9, the resin member 2b has a flat surface 21b, and a groove section 22b recessed from the surface 21b. Further, the groove section 22b is an example of "a concave section" of the present disclosure. The groove section 22b has a rectangular cross section, and is formed in an annular shape to correspond to the protrusion 12 of the metal member 1 when seen from a plan view. The groove section 22b is formed such that the protrusion 12 of the metal member 1 is fitted thereinto. Specifically, as shown in FIG. 8, a depth of the groove section 22b is smaller than a height of the protrusion 12, and a width of the groove section 22b is larger than a width of the protrusion 12.

Further, the other configuration of the resin member 2b is the same as that of the resin member 2.

Then, in the bonded structure 100b, the protrusion 12 of the metal member 1 and the groove section 22b of the resin member 2b are fitted to each other, and the metal member 1 and the resin member 2b are bonded in the bonding region R in which there are fitted. For this reason, in the bonded structure 100b, the surface 11 of the metal member 1 and the surface 21b of the resin member 2b are separated from each other.

Further, the method for manufacturing the bonded structure 100b is the same as that of the first reference example except that the groove section 22b of the resin member 2b comes in contact with the bonding region R of the protrusion 12 of the metal member 1.

In the third reference example, as described above, since a thickness of a portion of the resin member 2b corresponding to the bonding region R can be reduced by forming the groove section 22b in the resin member 2b, even when the thickness of the resin member 2b is large and transmittance of the laser beam L2 for bonding is low, the laser beam L2 can easily pass therethrough. That is, in the third reference example, even when the thickness of the resin member 2b is large and the transmittance of the laser beam L2 is low (for example, when the thickness is larger than 1.0 mm and the transmittance is lower than 30%), the bonded structure 100b can be obtained.

In addition, in the third reference example, as the protrusion 12 of the metal member 1 and the groove section 22b of the resin member 2b are fitted to each other, positioning upon bonding can be easily performed.

Further, the other effect of the third reference example is the same as that of the first reference example.

### (Fourth reference example)

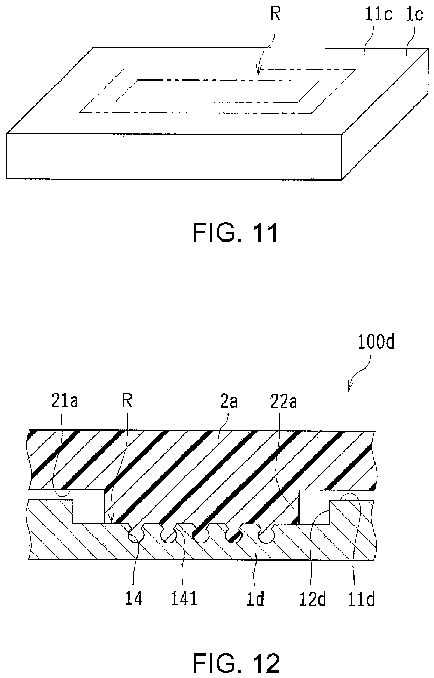

Next, a bonded structure 100c according to a fourth reference example of the present disclosure will be described with reference to FIGs. 10 and 11.

As shown in FIG. 10, the bonded structure 100c includes a metal member 1c and a resin member 2a, and the metal member 1c and the resin member 2a are bonded.

As shown in FIG. 11, the metal member 1c has a flat surface 11c, and the bonding region R is formed on the surface 11c. The bonding region R is disposed at a position corresponding to the protrusion 22a of the resin member 2a, and formed in an annular shape when seen from a plan view. A plurality of perforations 14 (see FIG. 10) having projections 141 are formed in the bonding region R. That is, unlike the first reference example, the protrusion 12 (see FIG. 2) is not formed in the metal member 1c.

Further, the other configuration of the metal member 1c is the same as that of the metal member 1.

Then, in the bonded structure 100c, as shown in FIG. 10, the protrusion 22a of the resin member 2a butts against the bonding region R of the metal member 1c, and the metal member 1c and the resin member 2a are bonded in the bonding region R in which they butt against each other. For this reason, in the bonded structure 100c, the surface 11c of the metal member 1c and the surface 21a of the resin member 2a are separated from each other.

Further, the method for manufacturing the bonded structure 100c is the same as that of the first reference example except that the protrusion 22a of the resin member 2a comes in pressurized contact with the bonding region R of the metal member 1c in a state in which a portion of the resin member 2a other than the protrusion 22a is separated from the surface 11c of the metal member 1c.

In addition, the other effect of the fourth reference example is the same as that of the first reference example.

### (Embodiment)

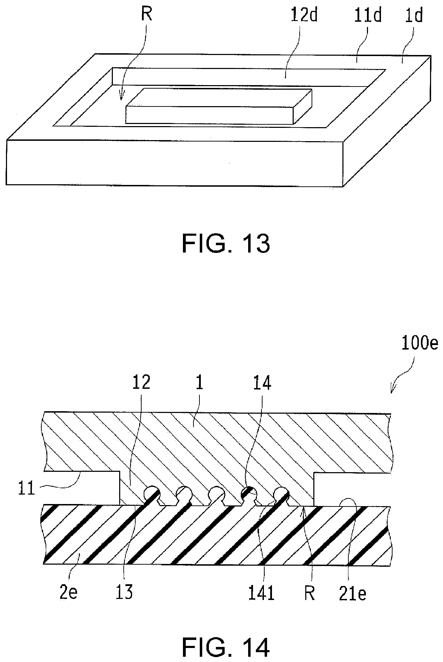

Next, a bonded structure 100d according to an embodiment of the present invention will be described with reference to FIGs. 12 and 13.

As shown in FIG. 12, the bonded structure 100d includes a metal member 1d and a resin member 2a, and the metal member 1d and the resin member 2a are bonded.

As shown in FIG. 13, the metal member 1d has a flat surface 11d, and a groove section 12d recessed from the surface 11d. Further, the groove section 12d is an example of "a concave section" of the present invention. The groove section 12d has a rectangular cross section, and is formed in an annular shape to correspond to the protrusion 22a of the resin member 2a when seen from a plan view. The groove section 12d is formed such that the protrusion 22a of the resin member 2a is fitted thereinto. Specifically, as shown in FIG. 12, a depth of the groove section 12d is smaller than a height of the protrusion 22a, and a width of the groove section 12d is larger than a width of the protrusion 22a. In addition, the bonding region R is formed on a bottom surface of the groove section 12d, and the bonding region R has an annular shape when seen from a plan view. A plurality of perforations 14 having projections 141 are formed on the bonding region R.

Further, the other configuration of the metal member 1d is the same as that of the metal member 1.

Then, in the bonded structure 100d, the groove section 12d of the metal member 1d and the protrusion 22a of the resin member 2a are fitted to each other, and the metal member 1d and the resin member 2a are bonded in the bonding region R in which they are fitted to each other. For example, in the bonded structure 100d, the surface 11d of the metal member 1d and the surface 21a of the resin member 2a are separated from each other.

The method for manufacturing the bonded structure 100d is the same as that of the fourth reference example except that the protrusion 22a of the resin member 2a comes in pressurized contact with the bonding region R of the groove section 12d of the metal member 1d.

In the embodiment, as described above, as the groove section 12d of the metal member 1d and the protrusion 22a of the resin member 2a are fitted to each other, positioning upon bonding can be easily performed.

Further, the other effect of the embodiment is the same as that of the first reference example.

### (Fifth reference example)

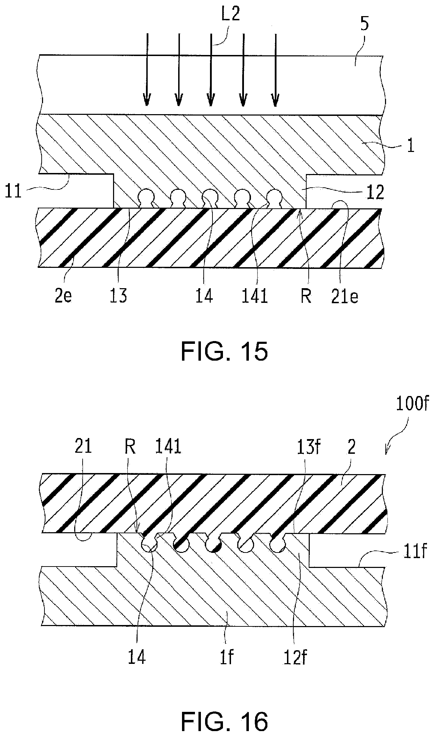

Next, a bonded structure 100e according to a fifth reference example of the present disclosure will be described with reference to FIGs. 14 and 15.

As shown in FIG. 14, the bonded structure 100e includes a metal member 1 and a resin member 2e, and the metal member 1 and the resin member 2e are bonded.

The resin member 2e may be formed of a material having a low permeability with respect to a laser beam L2 for bonding (see FIG. 15). For this reason, as the material of the resin member 2e, in addition to the materials exemplified in the first reference example, acrylonitrile-butadiene-styrene (ABS), modified polyphenylene ether (m-PPE), polyetheretherketone (PEEK), polyamideimide (PAI), liquid crystal polymer (LCP), polytetrafluoroethylene (PTFE), and polychloro-trifluoroethylene (PCTFE) may be exemplified.

Further, the other configuration of the resin member 2e is the same as that of the resin member 2.

In the bonded structure 100e, the resin member 2e butts against the end surface 13 of the protrusion 12 of the metal member 1, and the metal member 1 and the resin member 2e are bonded in the bonding region R of the end surface 13. For this reason, in the bonded structure 100e, the surface 11 of the metal member 1 and the surface 21e of the resin member 2e are separated from each other.

As shown in FIG. 15, the method for manufacturing the bonded structure 100e is the same as that of the first reference example except that the pressurizing member 5 is disposed with the metal member 1 sandwiched between the resin member 2e and the pressurizing member 5 and the metal member 1 is irradiated with the laser beam L2 and heated from a side opposite to the resin member 2e.

In the fifth reference example, as described above, as the laser beam L2 is radiated from the side opposite to the resin member 2e, even when the resin member 2e has no permeability with respect to the laser beam L2 or the laser beam L2 is hard to be radiated from the resin member 2e side, the bonded structure 100e can be obtained.

Further, the other effect of the fifth reference example is the same as the first reference example.

### (Sixth reference example)

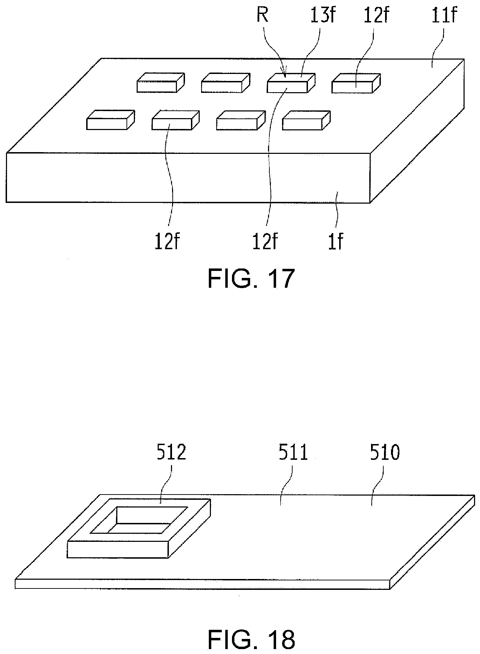

Next, a bonded structure 100f according to a sixth reference example of the present disclosure will be described with reference to FIGs. 16 and 17.

As shown in FIG. 16, the bonded structure 100f includes a metal member 1f and a resin member 2, and the metal member 1f and the resin member 2 are bonded.

As shown in FIG. 17, the metal member 1f has a flat surface 11f, and a plurality of protrusions 12f protruding from the surface 11f. Each of the protrusions 12f has a rectangular cross section, and a bonding region R to which the resin member 2 is bonded is formed on an end surface (an upper end surface) 13f thereof. Unlike the first reference example, the protrusion 12f is not formed in an annular shape when seen from a plan view. That is, the protrusions 12f are separated (independent) from each other. A plurality of perforations 14 having projections 141 are formed in the bonding region R.

Further, the other configuration of the metal member 1f is the same as that of the metal member 1.

In the bonded structure 100f, as shown in FIG. 16, the resin member 2 butts against the end surface 13f of the protrusion 12f of the metal member 1f, the metal member 1f and the resin member 2 are bonded in the bonding region R of the end surface 13f. For this reason, in the bonded structure 100f, the surface 11f of the metal member 1f and the surface 21 of the resin member 2 are separated from each other.

The method for manufacturing the bonded structure 100f is the same as that of the first reference example.

In the sixth reference example, as described above, since a contact surface between the metal member 1f and the resin member 2 can be further reduced as the plurality of protrusions 12f are separated, a welding pressure can be more efficiently applied to the bonding region R.

Further, the other effect of the sixth reference example is the same as that of the first reference example.

### (Experiment 1)

Next, Experiment 1 performed to confirm effects of the embodiments will be described with reference to FIGs. 18 to 21.

In Experiment 1, bonded structures according to Experimental Reference Examples 1 to 4 corresponding to the first to fourth reference example, Experimental Example 5 corresponding to the embodiment, Experimental Reference Examples 6 and 7 corresponding to the fifth and sixth reference example, and a bonded structure according to a comparative example were fabricated, and bonding estimation of these structures was performed. Further, for bonding estimation, a bonding strength was measured for those not subjected to a thermal shock experiment, a bonding strength was performed for those after a thermal shock experiment, and determination of qualification or disqualification was performed on the basis of the measurement result.

### - Method for manufacturing bonded structures -

First, a method of manufacturing a bonded structure according to Experimental Reference Example 1 will be described.

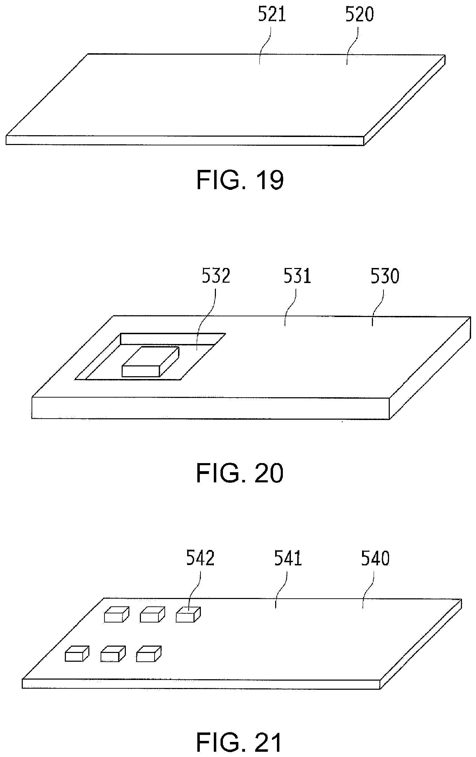

In the bonded structure of Experimental Reference Example 1, SUS304 was measured as a material of the metal member 510. As shown in FIG. 18, a metal member 510 is formed in a plate shape, a length is 40 mm, a width is 20 mm, and a thickness is 1 mm. A protrusion 512 is formed on a surface 511 of the metal member 510. The protrusion 512 is formed in a rectangular annular shape when seen from a plan view, a width is 0.8 mm, and a height is 0.5 mm. Meanwhile, PMMA was used as a material of a resin member 520. As shown in FIG. 19, the resin member 520 is formed in a plate shape, a length is 40 mm, a width is 20 mm, and a thickness is 1 mm.

Then, a laser beam for machining was radiated to a bonding region of the protrusion 512 of the metal member 510 to form perforations. Radiation of the laser beam was performed using a fiber laser marker MX-Z2000 manufactured by Omron Corp. A radiation condition of the laser beam was as follows.

### <Laser radiation condition for machining>

Laser: fiber laser (wavelength of 1062 nm)
Frequency: 10 kHz
Scanning speed: 650mm/sec
Number of scanning: 20 times
Irradiation interval: 65 µm
Number of sub-pulses: 20

Further, the frequency is a frequency of a pulse constituted by a plurality of (in the example, 20) sub-pulses. That is, in the radiation condition, laser beams (pulses) are radiated by 10,000 times at an interval of 65 µm while moving the structure by 650 mm for one second, and the pulse is constituted by 20 sub-pulses. Further, the number of scanning is the number of radiation repeated by the laser beam at the same place.

In this way, as the laser beam in which one pulse is constituted by a plurality of sub-pulses is radiated, perforations are formed in the bonding region of the metal member 510, and projections are formed on inner circumferential surfaces of the perforations.

After that, in a state in which the surface 511 of the metal member 510 and a surface 521 of the resin member 520 are separated from each other and the resin member 520 comes in pressurized contact with the bonding region formed on the protrusion 512 of the metal member 510, as the laser beam for bonding is radiated on the bonding region from the resin member 520 side, the metal member 510 and the resin member 520 were bonded. Specifically, the metal member 510 is heated by radiation of the laser beam, and the resin member 520 is melted by the heat. For this reason, the melted resin member 520 is filled in the perforations, and then, the resin member 520 is solidified. In addition, the radiation condition of the laser beam for bonding is as follows. Further, a focus diameter was larger than a width of the protrusion to include the bonding region.

### <Laser radiation condition for bonding>

Laser: semiconductor laser (wavelength 808 nm)
Oscillating mode: continuous oscillation
Output: 18 W
Focus diameter: 1 mm
Scanning speed: 3 mm/sec
Welding pressure: 0.3 MPa
Number of scanning: 3 times

In this way, a bonded structure of Example 1 was fabricated.

Next, a method of manufacturing bonded structures of Example 2 to 7 and a comparative example will be described.

In the bonded structure of Experimental Reference Example 2, a shape of the resin member was the same as that of the metal member 510. That is, the protrusion was formed on the surface of the resin member, and the protrusion butted against the protrusion of the metal member and bonded thereto. Further, the other point of Experimental Reference Example 2 is the same as that of Experimental Reference Example 1.

In the bonded structure of Experimental Reference Example 3, as shown in FIG. 20, the resin member 530 is formed in a plate shape, a length is 40 mm, a width is 20 mm, and a thickness is 1 mm. A groove section (a concave section) 532 is formed in a surface 531 of a resin member 530. The groove section 532 is formed in a rectangular annular shape when seen from a plan view, a width is 1.0 mm, and a depth is 0.3 mm. That is, a width of the groove section 532 is larger than a width of the protrusion 512, and a depth of the groove section 532 is smaller than a height of the protrusion 512. Then, in the bonded structure of Example 3, the protrusion 512 of the metal member 510 and the groove section 532 of the resin member 530 were fitted and bonded. Further, the other point of Experimental Reference Example 3 is the same as that of Experimental Reference Example 1.

In the bonded structure of Experimental Reference Example 4, a shape of the resin member was the same as that of the metal member 510, and a shape of the metal member was the same as that of the resin member 520. That is, in Experimental Reference Example 4, a bonding region having a shape reversed from that in Experimental Reference Example 1 and in a rectangular annular shape was formed on a flat surface of the metal member. Further, the other point of Experimental Reference Example 4 is the same as that of Experimental Reference Example 1.

In the bonded structure of Experimental Example 5, a shape of the resin member was the same as that of the metal member 510, and a shape of the metal member was the same as that of the resin member 530. That is, in Experimental Example 5, a bonding region having a shape reversed from that in Example 3 and in a rectangular annular shape was formed on a groove section of the metal member. Further, the other point of Experimental Example 5 is the same as that of Experimental Reference Example 1.

In the bonded structure of Experimental Reference Example 6, a laser beam for bonding was radiated from the metal member side. Further, the other point of Experimental Reference Example 6 is the same as that of Experimental Reference Example 1.

In the bonded structure of Experimental Reference Example 7, as shown in FIG. 21, a plurality of protrusions 542 were formed on a surface 541 of a metal member 540. The protrusion 542 has a length of 2 mm, a width of 0.8 mm and a height of 0.5 mm. That is, the protrusion 542 is not formed in an annular shape when seen from a plan view. Further, the other point of Experimental Reference Example 7 is the same as that of Experimental Reference Example 1.

In the bonded structure of the comparative example, a shape of the metal member was the same as that of the resin member 520, and the bonding region was formed on the flat surface of the metal member. That is, in the comparative example, both of the metal member and the resin member are flat, and the protrusion and the groove section are not formed. Further, the other point of the comparative example is the same as that of Experimental Reference Example 1.

### - Bonding estimation

Then, bonding estimation of the bonded structure of Experimental Examples 1 to 7 and the bonded structure of the comparative example was performed, and the result was shown in Table 1.

**[Table 1]**

| | | Experimental Reference Example 1 | Experimental Reference Example 2 | Experimental Reference Example 3 | Experimental Reference Example 4 | Experimental Example 5 | Experimental Reference Example 6 | Experimental Reference Example 7 | Comparative Example |
|---|---|---|---|---|---|---|---|---|---|
| Resin filling rate | | 98 | 97 | 97 | 96 | 96 | 96 | 96 | 79 |
| Adhesive strength before thermal shock experiment (MPa) | Shearing direction | 17.3 | 16.5 | 17.1 | 16.5 | 16.7 | 17.2 | 16.4 | 12.5 |
| | Separating direction | 7.4 | 7.0 | 6.6 | 6.8 | 7.0 | 6.5 | 7.0 | 5.2 |
| Adhesive strength after thermal shock experiment (MPa) | Shearing direction | 17.0 | 15.2 | 16.4 | 15.0 | 15.4 | 16.5 | 14.9 | 7.8 |
| | Separating direction | 7.2 | 6.6 | 6.3 | 6.3 | 6.7 | 6.1 | 6.6 | 3.6 |
| Adhesive strength maintenance rate (%) | Shearing direction | 98 | 92 | 96 | 91 | 92 | 96 | 91 | 62 |
| | Separating direction | 97 | 94 | 95 | 93 | 96 | 94 | 94 | 69 |
| Determination of pass or failure | | ○ | ○ | ○ | ○ | ○ | ○ | ○ | × |

Further, the resin filling rate was obtained by observing a cross section of the perforation, measuring an area of the cross section of the perforation, measuring an area of the cross section of the resin member filled in the perforation, and calculating a ratio of an area occupied by the resin member with respect the area of the perforation.

In addition, the bonding strength was measured using an electric mechanical universal testing machine 5900 manufactured by Instron Corporation. Specifically, a test was performed at a tension rate of 5 mm/min in a shearing direction and a separating direction (a vertical direction), and a test was terminated at a breakage of the resin member or a breakage of the bonding interface. Then, a maximum strength in the test is employed as a bonding strength. Further, the shearing direction is a direction deviated along the bonding interface.

In addition, in the thermal shock experiment, a low temperature exposure at -40°C for 30 minutes and a high temperature exposure at 70°C for 30 minutes were repeated 500 times.

Then, in order to determine reliability under a heat cycle environment, determination of pass or failure was performed on the basis of the following reference.

Pass (○): "bonding strength after thermal shock experiment"/"bonding strength before thermal shock experiment" ≥ 90%

Failure (×): "bonding strength after thermal shock experiment"/"bonding strength before thermal shock experiment" < 90%

As shown in Table 1, while the resin filling rate was higher than 90 % in the bonded structure of Experimental Examples 1 to 7, the resin filling rate was lower than 80 % in the bonded structure of the comparative example. This is because, in the bonded structures of Experimental Examples 1 to 7, as the protrusion is formed on at least one of the metal member and the resin member, the welding pressure upon laser bonding can be concentrated to the contact surface including the bonding region.

Then, while the bonding strength before the thermal shock experiment was maintained at 90 % or more even after the thermal shock experiment in the bonded structures of Examples 1 to 7, the bonding strength maintenance rate was lower than 70 % in the bonded structure of the comparative example. Accordingly, in the bonded structures of Examples 1 to 7, since the anchor effect is hard to be decreased as improvement of the resin filling rate is achieved, improvement of durability under the heat cycle environment could be achieved.

### (Experiment 2)

Next, Experiment 2 performed to confirm a relation between the number of scanning of the laser beam for bonding and the resin filling rate will be described.

In Experiment 2, the bonded structures according to Experimental Reference Examples 8 and 9 were fabricated. In Experimental Reference Example 8, the number of scanning of the laser beam for bonding was one, and in Experimental Reference Example 9, the number of scanning of the laser beam for bonding was two. Further, the other point of Experimental Reference Examples 8 and 9 is the same as that of Experimental Reference Example 1. In addition, the number of scanning of Experimental Reference Example 1 is three as described above. Then, bonding estimation for these examples was performed, and a result thereof has been shown in Table 2.

**[Table 2]**

| | | Experimental Reference Example 8 | Experimental Reference Example 9 |
|---|---|---|---|
| Number of scanning | | 1 | 2 |
| Resin filling rate | | 92 | 96 |
| Adhesive strength before thermal shock experiment (MPa) | Shearing direction | 17.0 | 17.0 |
| | Separating direction | 6.0 | 6.0 |
| Adhesive strength after thermal shock experiment (MPa) | Shearing direction | 15.8 | 16.2 |
| | Separating direction | 5.5 | 6.6 |
| Adhesive strength maintenance rate (%) | Shearing direction | 93 | 95 |
| | Separating direction | 92 | 94 |
| Determination of pass or failure | | ○ | ○ |

As shown in Tables 1 and 2, in Experimental Reference Examples 1, 8 and 9, when the number of scanning of the laser beam for bonding is increased, the bonding strength maintenance rate could be improved while improving the resin filling rate. Further, even when the number of scanning is one, the bonding strength maintenance rate was higher than 90 % while the resin filling rate was higher than 90 %.

### (Another embodiment)

Further, the embodiment disclosed at this time is exemplified in all aspects and is not a basis for a limited interpretation. Accordingly, the present invention is not to be interpreted only by the above-mentioned embodiment but is defined based on the description of the claims.

For example, while the example in which the projections 141 are formed in the perforations 14 has been exemplified in the first reference example, the embodiment is not limited thereto and the perforation may be formed in a cylindrical shape or a conical shape. In addition, while the example in which the perforations 14 are formed by the laser beam L1 has been described, the embodiment is not limited thereto and the perforations may be formed through plasma processing, sand paper processing, anodic oxidation, discharge machining processing, etching processing, pressing processing, or the like.

In addition, in the first reference example, while the example in which the metal member 1 and the resin member 2 are bonded by the laser beam L2 for bonding has been described, the embodiment is not limited thereto and the metal member and the resin member may be bonded by hot pressing bonding or ultrasonic bonding. In this case, in addition to the materials exemplified in the first reference example as the material of the resin member, the materials exemplified in the fifth reference example may be used.

In addition, as been described in the first reference example, while the laser beam L2 for bonding is scanned for a plurality of times, the embodiment is not limited thereto, and the number of scanning the laser beam for bonding may be one time.

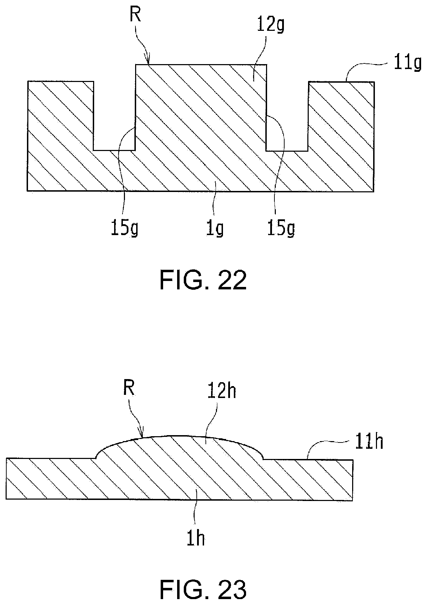

In addition, while the example in which the protrusion 12 is formed on the surface 11 of the metal member 1 has been described in the first reference example, in a metal member 1g according to a first variant shown in FIG. 22, a concave section 15g recessed from the surface 11g may be formed at a side of the protrusion 12g while forming a protrusion 12g on a flat surface 11g. According to the above-mentioned configuration, thermal diffusion can be further suppressed by the concave section 15g upon laser irradiation for bonding.

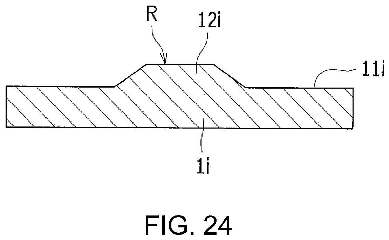

In addition, while the example in which the protrusion 12 having a rectangular cross section is formed on the surface 11 of the metal member 1 has been described in the first reference example, in a metal member 1h according to a second variant shown in FIG. 23, a protrusion 12h having an arc-shaped cross section may be formed on a surface 11h. In addition, like a metal member 1i according to a third variant shown in FIG. 24, a protrusion 12i having a trapezoidal cross section may be formed on a surface 11i.

In addition, while the example in which the surface 11 of the metal member 1 and the surface 21 of the resin member 2 are flat has been described in the first reference example, the embodiment is not limited thereto and the surface of the metal member and the surface of the resin member may be curved.

In addition, while the example in which the pressurizing member 5 is disposed on the entire surface of the resin member 2 has been described in the first reference example, the embodiment is not limited thereto and the pressurizing member may be disposed in only a region through which the laser beam for bonding does not pass. In this case, the pressurizing member may not have permeability with respect to the laser beam for bonding.

In addition, while the example in which the bonding region R is formed on the entire region of the end surface 13 has been described in the first reference example, the embodiment is not limited thereto and the bonding region may be formed on a partial region of the end surface.

In addition, while the example in which the protrusion 12 is formed in a rectangular annular shape when seen from a plan view has been described in the first reference example, the embodiment is not limited thereto and the protrusion may be formed in an annular shape when seen from a plan view.

Further, the above-mentioned embodiments and reference examples may be appropriately combined. For example, the fourth reference example and the sixth reference example may be combined, a plurality of protrusions of the resin member may be formed, and the protrusions may be separated.

### [Industrial Applicability]

The present invention may be used in a method for manufacturing a bonded structure in which a metal member and a resin member are bonded.

### [Reference Signs List]

- 1, 1c, 1d, 1f, 1g, 1h, 1i: Metal member
- 2, 2a, 2b, 2e: Resin member
- 11, 11c, 11d, 11f, 11g, 11h, 11i: Surface
- 12, 12f, 12g, 12h, 12i: Protrusion
- 12d: Groove section (concave section)
- 14: Perforation
- 21, 21a, 21b, 21e: Surface
- 22a: Protrusion
- 22b: Groove section (concave section)
- 100, 100a, 100b, 100c, 100d, 100e, 100f: Bonded structure

## Claims

1. A method for manufacturing a bonded structure (100d) in which a metal member (1d) and a resin member (2a) are bonded, the method comprising:
a process of forming a perforation (14) having an opening in a bonding region (R) of the metal member (1d);
a process of bringing a protrusion (22a) of the resin member (2a) in pressurized contact with the bonding region (R) of the metal member (1d) in a state where the protrusion (22a) is formed on a surface (21a) of the resin member (2a), and a portion of the resin member (2a) except for the protrusion (22a) is separated from a surface (11d) of the metal member (1d); and
a process of melting the resin member (2a) in contact with the bonding region (R) of the metal member (1d) and solidifying the resin member (2a) after the perforation (14) is filled with the melted resin member (2a),
the method being **characterized in that**
in the bonded structure (100d), a concave section (12d) is formed on the surface (11d) of the metal member (1d), a depth of the concave section (12d) is smaller than a height of the protrusion (22a), a width of the concave section (12d) is larger than a width of the protrusion (22a), and the bonding region (R) is formed in the concave section (12d).

2. The method for manufacturing the bonded structure (100d) according to claim 1, wherein the protrusion (22a) of the resin member (2a) is formed in an annular shape when seen from a plan view.

3. The method for manufacturing the bonded structure (100d) according to claim 1, wherein a plurality of protrusions (22a) of the resin member (2a) are formed, and the protrusions (22a) are separated from each other.

4. The method for manufacturing the bonded structure (100d) according to any one of claims 1 to 3, wherein the resin member (2a) is melted by irradiating the metal member (1d,) with a first laser beam (L2).

5. The method for manufacturing the bonded structure (100d) according to claim 4, wherein the first laser beam (L2) is scanned for a plurality of times.

6. The method for manufacturing the bonded structure (100d) according to any one of claims 1 to 5, wherein the perforation (14) is formed by irradiating the bonding region (R) of the metal member (1d) with a second laser beam (L1).

7. The method for manufacturing the bonded structure (100d) according to claim 6, wherein the second laser beam (L1) has a pulse that is constituted by a plurality of sub-pulses.

8. A bonded structure (100d) in which a metal member (1d) and a resin member (2a) are bonded, wherein a protrusion (22a) is formed on a surface (21a) of the resin member (2a) and a bonding region (R) is formed on the metal member (1d) at a position opposite to the protrusion (22a) when the protrusion (22a) is formed on the resin member (2a),
a perforation (14) having an opening is formed in the bonding region (R) of the metal member (1d),
the perforation (14) of the metal member (1d) is filled with the resin member (2a), a portion of the resin member (2a) is separated from the metal member (1d), and the resin member (2a) comes in contact with the bonding region (R) of the metal member (1d), and
the bonded structure (100d) is **characterized by** further comprising a concave section (12d) formed on the surface (11d) of the metal member (1d),
wherein a depth of the concave section (12d) is smaller than a height of the protrusion (22a), a width of the concave section (12d) is larger than a width of the protrusion (22a) and the bonding region (R) is formed in the concave section (12d).

## Patentansprüche

1. Verfahren zur Herstellung einer Verbundstruktur (100d), wobei ein Metallelement (1d) und ein Harzelement (2a) verbunden sind, wobei das Verfahren umfasst:
einen Prozess zum Ausbilden einer Perforation (14) mit einer Öffnung in einem Verbundbereich (R) des Metallelements (1d);
einen Prozess zum Bringen eines Vorsprungs (22a) des Harzelements (2a) in Druckkontakt mit dem Verbundbereich (R) des Metallelements (1d) in einem Zustand, in dem der Vorsprung (22a) an einer Oberfläche (21a) des Harzelements (2a) ausgebildet ist und ein Abschnitt des Harzelements (2a) mit Ausnahme des Vorsprungs (22a) von einer Oberfläche (11d) des Metallelements (1d) getrennt ist; und
einen Prozess zum Schmelzen des Harzelements (2a) in Kontakt mit dem Verbundbereich (R) des Metallelements (1d) und zum Verfestigen des Harzelements (2a), nachdem die Perforation (14) mit dem geschmolzenen Harzelement (2a) gefüllt worden ist,
wobei das Verfahren **dadurch gekennzeichnet ist, dass**
in der Verbundstruktur (100d) eine konkave Sektion (12d) an der Oberfläche (11d) des Metallelements (1d) gebildet wird, eine Tiefe der konkaven Sektion (12d) kleiner als eine Höhe des Vorsprungs (22a) ist, eine Breite der konkaven Sektion (12d) größer als eine Breite des Vorsprungs (22a) ist, und der Verbundbereich (R) in der konkaven Sektion (12d) gebildet wird.

2. Verfahren zur Herstellung einer Verbundstruktur (100d) gemäß Anspruch 1, wobei der Vorsprung (22a) des Harzelements (2a) in einer Draufsicht gesehen ringförmig ausgebildet ist.

3. Verfahren zur Herstellung einer Verbundstruktur (100d) gemäß Anspruch 1, wobei eine Vielzahl von Vorsprüngen (22a) des Harzelements (2a) gebildet wird und die Vorsprünge (22a) voneinander getrennt sind.

4. Verfahren zur Herstellung einer Verbundstruktur (100d) gemäß irgendeinem der Ansprüche 1 bis 3, wobei das Harzelement (2a) durch Bestrahlung des Metallelements (1d) mit einem ersten Laserstrahl (L2) geschmolzen wird.

5. Verfahren zur Herstellung einer Verbundstruktur (100d) gemäß Anspruch 4, wobei der erste Laserstrahl (L2) mehrere Male gerastert wird.

6. Verfahren zur Herstellung einer Verbundstruktur (100d) gemäß irgendeinem der Ansprüche 1 bis 5, wobei die Perforation (14) durch Bestrahlung des Verbundbereichs (R) des Metallteils (1d) mit einem zweiten Laserstrahl (L1) gebildet wird.

7. Verfahren zur Herstellung einer Verbundstruktur (100d) gemäß Anspruch 6, wobei der zweite Laserstrahl (L1) einen Puls aufweist, der aus einer Vielzahl von Teilpulsen gebildet ist.

8. Verbundstruktur (100d), in dem ein Metallelement (1d) und ein Harzelement (2a) verbunden sind, wobei ein Vorsprung (22a) auf einer Oberfläche (21a) des Harzelements (2a) ausgebildet ist und ein Verbundbereich (R) auf dem Metallelement (1d) an einer Position gegenüber dem Vorsprung (22a) ausgebildet ist, wenn der Vorsprung (22a) an dem Harzelement (2a) ausgebildet ist,
wobei eine Perforation (14) mit einer Öffnung in dem Verbundbereich (R) des Metallelements (1d) ausgebildet ist,
die Perforation (14) des Metallelements (1d) mit dem Harzelement (2a) gefüllt ist, ein Abschnitt des Harzelements (2a) von dem Metallelement (1d) getrennt ist und das Harzelement (2a) in Kontakt mit dem Verbundbereich (R) des Metallelements (1d) kommt, und
wobei die Verbundstruktur (100d) **dadurch gekennzeichnet ist, dass** sie ferner eine konkave Sektion (12d) umfasst, die an der Oberfläche (11d) des Metallelements (1d) ausgebildet ist,
wobei eine Tiefe der konkaven Sektion (12d) kleiner als eine Höhe des Vorsprungs (22a) ist, eine Breite der konkaven Sektion (12d) größer als eine Breite des Vorsprungs (22a) ist und der Verbundbereich (R) in der konkaven Sektion (12d) ausgebildet ist.

## Revendications

1. Procédé de fabrication d'une structure liée (100d) dans laquelle un élément métallique (1d) et un élément de résine (2a) sont liés, le procédé comprenant :
un processus de formation d'une perforation (14) ayant une ouverture dans une région de liaison (R) de l'élément métallique (1d) ;
un processus de mise d'une saillie (22a) de l'élément de résine (2a) en contact pressurisé avec la région de liaison (R) de l'élément métallique (1d) dans un état dans lequel la saillie (22a) est formée sur une surface (21a) de l'élément de résine (2a), et une portion de l'élément de résine (2a) à l'exception de la saillie (22a) est séparée d'une surface (11d) de l'élément métallique (1d) ; et
un processus de fusion de l'élément de résine (2a) en contact avec la région de liaison (R) de l'élément métallique (1d) et de solidification de l'élément de résine (2a) après que la perforation (14) est remplie de l'élément de résine (2a) fondu,
le procédé étant **caractérisé en ce que** dans la structure liée (100d), une section concave (12d) est formée sur la surface (11d) de l'élément métallique (1d), une profondeur de la section concave (12d) est plus petite qu'une hauteur de la saillie (22a), une largeur de la section concave (12d) est plus grande qu'une largeur de la saillie (22a), et la région de liaison (R) est formée dans la section concave (12d).

2. Procédé de fabrication de la structure liée (100d) selon la revendication 1, dans lequel la saillie (22a) de l'élément de résine (2a) est formée dans une forme annulaire en vue en plan.

3. Procédé de fabrication de la structure liée (100d) selon la revendication 1, dans lequel une pluralité de saillies (22a) de l'élément de résine (2a) sont formées, et les saillies (22a) sont séparées les unes des autres.

4. Procédé de fabrication de la structure liée (100d) selon l'une quelconque des revendications 1 à 3, dans lequel l'élément de résine (2a) est fondu par irradiation de l'élément métallique (1d) avec un premier faisceau laser (L2).

5. Procédé de fabrication de la structure liée (100d) selon la revendication 4, dans lequel le premier faisceau laser (L2) est balayé une pluralité de fois.

6. Procédé de fabrication de la structure liée (100d) selon l'une quelconque des revendications 1 à 5, dans lequel la perforation (14) est formée par irradiation de la région de liaison (R) de l'élément métallique (1d) avec un deuxième faisceau laser (L1).

7. Procédé de fabrication de la structure liée (100d) selon la revendication 6, dans lequel le deuxième faisceau laser (L1) a une impulsion qui est constituée d'une pluralité de sous-impulsions.

8. Structure liée (100d) dans laquelle un élément métallique (1d) et un élément de résine (2a) sont liés, dans laquelle une saillie (22a) est formée sur une surface (21a) de l'élément de résine (2a), et une région de liaison (R) est formée sur l'élément métallique (1d) à une position à l'opposé de la saillie (22a) lorsque la saillie (22a) est formée sur l'élément de résine (2a),
une perforation (14) ayant une ouverture est formée dans la région de liaison (R) de l'élément métallique (1d) ,
la perforation (14) de l'élément métallique (1d) est remplie de l'élément de résine (2a), une portion de l'élément de résine (2a) est séparée de l'élément métallique (1d), et l'élément de résine (2a) vient au contact de la région de liaison (R) de l'élément métallique (1d), et
la structure liée (100d) est **caractérisée en ce qu'**elle comprend en outre une section concave (12d) formée sur la surface (11d) de l'élément métallique (1d),
dans laquelle une profondeur de la section concave (12d) est plus petite qu'une hauteur de la saillie (22a), une largeur de la section concave (12d) est plus grande qu'une largeur de la saillie (22a), et la région de liaison (R) est formée dans la section concave (12d).
